(19) **Europäisches Patentamt European Patent Office Office européen des brevets**

(11) **EP 4 725 975 A1**

(12) **EUROPEAN PATENT APPLICATION**
published in accordance with Art. 153(4) EPC

(43) Date of publication:
**15.04.2026 Bulletin 2026/16**

(21) Application number: **24832290.1**

(22) Date of filing: **31.05.2024**

(51) International Patent Classification (IPC):
*C08G 63/16* (2006.01)     *C08G 63/78* (2006.01)
*C08J 5/18* (2006.01)

(52) Cooperative Patent Classification (CPC):
**C08G 63/16; C08G 63/78; C08J 5/18**

(86) International application number:
**PCT/KR2024/007455**

(87) International publication number:
**WO 2025/005508 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 KR 20230085268**

(71) Applicants:
• **SK Innovation Co., Ltd.**
  **Seoul 03188 (KR)**
• **SK Geo Centric Co., Ltd.**
  **Jongno-gu**
  **Seoul 03161 (KR)**

(72) Inventors:
• **IM, Sujin**
  **Seoul 07793 (KR)**

• **KIM, Jeongsun**
  **Seoul 07793 (KR)**
• **YOON, Hoewon**
  **Seoul 07793 (KR)**
• **KIM, Jinwoo**
  **Seoul 07793 (KR)**
• **KIM, Yuhyun**
  **Seoul 07793 (KR)**
• **LEE, Sung Won**
  **Seoul 03188 (KR)**
• **NAM, Joo Hyun**
  **Seoul 03188 (KR)**
• **SHIN, Hyo Joo**
  **Seoul 03188 (KR)**

(74) Representative: **Lorenz Seidler Gossel Part. mbB**
**Widenmayerstr. 23**
**80538 München (DE)**

(54) **BIODEGRADABLE POLYESTER RESIN AND PREPARING METHOD THEREOF**

(57) Provided are a biodegradable polyester resin composition, a preparing method thereof, and a biodegradable polyester film prepared from the composition, the composition comprising a resin, which includes a residue of a dicarboxylic acid component and a residue of a diol component, and satisfying equation 1. By satisfying equation 1, the productivity and processability of the biodegradable polyester resin composition are improved such that the tensile strength, elongation, and tear strength of the biodegradable polyester film can be enhanced. [Equation 1] In equation 1, G' is a storage modulus at a temperature of 190°C and a frequency of 10 rad/s to 100 rad/s in dynamic viscoelasticity measurement, and G'' is a loss modulus at a temperature of 190°C and a frequency of 10 rad/s to 100 rad/s in dynamic viscoelasticity measurement.

【FIG. 1】

## Description

[Technical Field]

The present disclosure relates to a biodegradable polyester resin and a method for preparing the same.

[Background Art]

The polyester resin refers to a polymer resin having an ester (RO-C(=O)-R') functional group in the main chain, and is used for various applications such as packaging materials, display materials, and insulating materials in a wide range of industrial fields. In recent years, studies on biodegradable polyester compositions have been conducted in consideration of environmental protection issues.

In general, a biodegradable polyester composition is prepared using an aliphatic dicarboxylic acid, an aromatic dicarboxylic acid, and an aliphatic diol as main raw materials, and using a branching agent, a catalyst, a thermal stabilizer, and the like as auxiliary raw materials.

Specifically, a biodegradable polyester resin is prepared by subjecting the main raw materials to an esterification reaction and a polycondensation reaction in the presence of the auxiliary raw materials, and, in some cases, a chain extension reaction is performed after the polycondensation reaction to enhance the mechanical properties of the biodegradable polyester resin. In addition, the physical properties of the final biodegradable polyester resin may vary depending on the characteristics of the raw material mixture used in the preparation of the biodegradable polyester.

**[Disclosure]**

[Technical Problem]

According to one embodiment, there is provided a biodegradable polyester resin composition having excellent processability and mechanical properties.

According to another embodiment, there is provided a method for preparing a biodegradable polyester resin composition capable of improving the productivity and processability of the biodegradable polyester resin composition.

[Technical Solution]

In one general aspect, a biodegradable polyester resin composition includes a resin containing a residue of a dicarboxylic acid component and a residue of a diol component, the biodegradable polyester resin composition satisfying the following Formula 1:

[Formula 1]

$$0.1 \leq \int_{\frac{10rad}{s}}^{\frac{100rad}{s}} G' \bigg/ \int_{\frac{10rad}{s}}^{\frac{100rad}{s}} G'' \leq 1.5$$

wherein G' represents a storage modulus measured at a temperature of 190°C and in a frequency range of 10 rad/s to 100 rad/s in a dynamic viscoelastic measurement, and G" represents a loss modulus measured at a temperature of 190°C and in a frequency range of 10 rad/s to 100 rad/s in a dynamic viscoelastic measurement.

The dicarboxylic acid component may include an aromatic dicarboxylic acid having 6 to 12 carbon atoms and an aliphatic dicarboxylic acid having 4 to 10 carbon atoms, the aromatic dicarboxylic acid having 6 to 12 carbon atoms may include terephthalic acid, isophthalic acid, furandicarboxylic acid, naphthalenedicarboxylic acid, a diester derivative thereof, an anhydride thereof, or a mixture thereof, and the aliphatic dicarboxylic acid having 4 to 10 carbon atoms may include adipic acid, succinic acid, glutaric acid, azelaic acid, sebacic acid, a cyclic fatty acid, a diester derivative thereof, an anhydride thereof, or a mixture thereof.

The dicarboxylic acid component may include 30 mol% to 70 mol% of the aromatic dicarboxylic acid having 6 to 12 carbon atoms and 30 mol% to 70 mol% of the aliphatic dicarboxylic acid having 4 to 10 carbon atoms, based on the total amount of the dicarboxylic acid component.

The diol may include an aliphatic diol having 2 to 10 carbon atoms, and the aliphatic diol having 2 to 10 carbon atoms may include 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or a mixture thereof.

A molar ratio of the dicarboxylic acid component to the diol component is 1.0:0.8 to 1.0:1.2.

A rate of change in complex viscosity before and after an oscillatory time sweep at a temperature of 190°C and a frequency of 20 rad/s for 10 minutes is less than 15%.

The biodegradable polyester resin composition has a melt flow index (MI) of 10 g/10 min or less as measured at 190°C under a load of 2.16 kg in accordance with the ASTM D1238 standard.

In another general aspect, a method for preparing a biodegradable polyester resin composition includes a first step of preparing a raw material mixture containing an aromatic dicarboxylic acid, an aliphatic dicarboxylic acid, and an aliphatic diol; a second step of reacting the raw material mixture to prepare an oligomer; a third step of polycondensing the oligomer to prepare a prepolymer; and a fourth step of adding a chain extender to the prepolymer to obtain a biodegradable polyester resin composition, wherein the raw material mixture in the first step has a moisture content of 3,000 ppm or less, and the biodegradable polyester resin composition prepared in the fourth step satisfies Formula 1.

The aromatic dicarboxylic acid has a particle size distribution index (SPAN) of 5.0 or less.

A reaction conversion rate of the oligomer in the third step is represented by the following Formula 2, and the reaction conversion rate is 90% to 100%:

[Formula 2]

$$\text{Reaction conversion rate (\%)} = \frac{SV - AV}{SV} \times 100$$

wherein

AV represents the acid value represented by the following Formula 2-1; and
SV represents the saponification value represented by the following Formula 2-2:

[Formula 2-1]

$$\text{Acid value (AV)} = \frac{0.1 \times A \times P}{W}$$

wherein A represents the titration volume (ml) of a 0.1 N sodium hydroxide solution, P represents the titer of the 0.1 N sodium hydroxide solution, and W represents the mass of the oligomer:

[Formula 2-2]

$$\text{Saponification value (SV)} = \frac{0.5 \times (C - B) \times Q}{W'}$$

wherein B represents the titration volume (ml) of a 0.5 N hydrochloric acid (HCl) solution, C represents the titration volume (ml) of a blank solution, Q represents the titer of the 0.5 N hydrochloric acid solution, and W' represents the mass of the oligomer.

The aromatic dicarboxylic acid is terephthalic acid, isophthalic acid, furandicarboxylic acid, naphthalenedicarboxylic acid, a diester derivative thereof, an anhydride thereof, or a combination thereof, and the aliphatic dicarboxylic acid is adipic acid, succinic acid, glutaric acid, azelaic acid, sebacic acid, a cyclic fatty acid, a diester derivative thereof, an anhydride thereof, or a combination thereof.

The aromatic dicarboxylic acid may be contained in an amount of 20 mol% to 50 mol%, and the aliphatic dicarboxylic acid may be contained in an amount of 20 mol% to 50 mol%, based on the total number of moles of the raw material mixture.

The aliphatic diol is 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or a mixture thereof.

The aliphatic diol may be contained in an amount of 30 mol% to 60 mol% based on the total number of moles of the raw material mixture.

A molar ratio of the aromatic dicarboxylic acid and the aliphatic dicarboxylic acid to the aliphatic diol is 1.0:0.8 to 1.0:1.2.

In still another aspect, there is provided a biodegradable polyester film obtained by melt-extruding the above-described biodegradable polyester resin composition using a blown film extruder, or obtained by melt-extruding, using a blown film extruder, a biodegradable polyester resin composition prepared by the above-described preparation method.

[Advantageous Effects]

The polyester resin composition according to one embodiment may have improved productivity and processability.

The method for preparing a polyester resin composition according to another embodiment may uniformly control the reaction rate of each step and suppress side reactions.

A polyester film produced from the polyester resin composition according to one embodiment may secure excellent tensile strength, elongation, and tear strength.

[Description of Drawings]

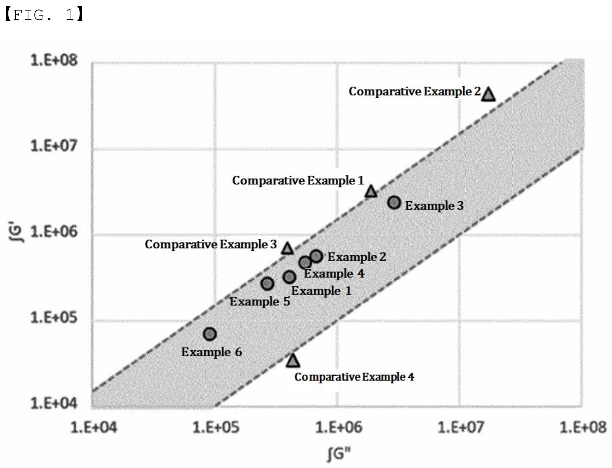

FIG. 1 is a graph showing values corresponding to the areas of the storage modulus and the loss modulus measured at 10 rad/s to 100 rad/s of the compositions according to the Examples and Comparative Examples.

[Best Mode]

The advantages and features of the technology described below, and methods for achieving them, will become apparent from the embodiments described in detail with reference to the accompanying drawings. However, the implemented forms are not limited to the embodiments disclosed below. Unless otherwise defined, all terms (including technical and scientific terms) used in the present specification may be interpreted as having meanings commonly understood by those skilled in the art. In addition, the terms defined in commonly used dictionaries are not to be interpreted ideally or exaggeratedly unless explicitly defined otherwise.

In the present specification, unless explicitly described to the contrary, "comprising" any components will be understood to imply further inclusion of other components rather than the exclusion of any other components. In addition, unless the context clearly indicates otherwise, singular forms used herein are intended to include plural forms.

Based on the above definitions, embodiments of the present invention will be described in detail. However, these embodiments are provided as examples, and the present invention is not limited thereto but is defined by the scope of the claims.

**[Biodegradable polyester resin composition]**

According to one embodiment, a biodegradable polyester resin composition includes a resin containing a residue of a dicarboxylic acid component and a residue of a diol component, the biodegradable polyester resin composition satisfying the following Formula 1.

[Formula 1]

$$0.1 \leq \int_{\frac{10 \, rad}{s}}^{\frac{100 \, rad}{s}} G' \Bigg/ \int_{\frac{10 \, rad}{s}}^{\frac{100 \, rad}{s}} G'' \leq 1.5$$

In Formula 1, G' represents a storage modulus measured at a temperature of 190°C and in a frequency range of 10 rad/s to 100 rad/s in a dynamic viscoelastic measurement, and G" represents a loss modulus measured at a temperature of 190°C and in a frequency range of 10 rad/s to 100 rad/s in a dynamic viscoelastic measurement.

In one embodiment, the storage modulus (G') and the loss modulus (G") are measured using a rotational rheometer (HR-2, TA Instruments) equipped with a 25 mm parallel plate.

In Formula 1,    $\int_{10 \, rad \, /s}^{100 \, rad \, /s} G'$    represents an integrated value of the storage modulus measured by performing a frequency sweep at a temperature of 190°C in a frequency range of 10 rad/s to 100 rad/s, and    $\int_{10 \, rad \, /s}^{100 \, rad \, /s} G''$    represents an integrated value of the loss modulus measured by performing a frequency sweep at a temperature of 190°C in a frequency range of 10 rad/s to 100 rad/s.

Specifically, the value obtained by dividing the integrated value of the storage modulus at a temperature of 190°C in a frequency range of 10 rad/s to 100 rad/s by the integrated value of the loss modulus under the same conditions is 0.1 to 2.0, for example, 0.1 to 1.75, 0.1 to 1.50, 0.15 to 1.5, 0.20 to 1.5, 0.25 to 1.5, 0.3 to 1.5, 0.4 to 1.5, 0.50 to 1.5, 0.50 to 1.3, or 0.50 to 1.0, but is not limited thereto.

When the biodegradable polyester resin composition satisfies Formula 1, the productivity and processability of the composition may be improved, and the biodegradable polyester film produced therefrom may have improved tensile strength, elongation, and tear strength.

In one embodiment, the dicarboxylic acid component contained in the biodegradable polyester resin composition includes an aromatic dicarboxylic acid having 6 to 12 carbon atoms and an aliphatic dicarboxylic acid having 4 to 10 carbon atoms.

The aromatic dicarboxylic acid is terephthalic acid, isophthalic acid, furandicarboxylic acid, naphthalenedicarboxylic acid, a diester derivative thereof, an anhydride thereof, or a combination thereof, and, for example, is terephthalic acid, isophthalic acid, a diester derivative thereof, or a combination thereof, but is not limited thereto.

The aliphatic dicarboxylic acid is adipic acid, succinic acid, glutaric acid, azelaic acid, sebacic acid, a cyclic fatty acid, a diester derivative thereof, an anhydride thereof, or a combination thereof, and, for example, is adipic acid, succinic acid, a diester derivative thereof, or a combination thereof, but is not limited thereto.

In one embodiment, the dicarboxylic acid component may include 30 mol% to 70 mol% of the aromatic dicarboxylic acid having 6 to 12 carbon atoms and 30 mol% to 70 mol% of the aliphatic dicarboxylic acid having 4 to 10 carbon atoms, based on the total amount of the dicarboxylic acid component.

In one embodiment, the aliphatic diol is 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or a mixture thereof, but is not limited thereto.

In one embodiment, a molar ratio of the aromatic dicarboxylic acid and the aliphatic dicarboxylic acid to the aliphatic diol contained in the biodegradable polyester resin composition is 1.0:0.8 to 1.0:1.2, for example, 1.0:0.8 to 1.0:1.15, or 1.0:1.1, but is not limited thereto.

The biodegradable polyester resin composition according to one embodiment has a rate of change in complex viscosity before and after an oscillatory time sweep at a temperature of 190°C and a frequency of 20 rad/s for 10 minutes of less than 15%.

The complex viscosity may be measured using a rotational rheometer (HR-2, TA Instruments), and the rate of change in complex viscosity may be calculated by measuring the complex viscosity values before and after performing an oscillatory time sweep at an angular frequency of 20 rad/s for 10 minutes. Specifically, the rate of change in complex viscosity may be calculated by [(Complex viscosity value after 10 minutes - Initial complex viscosity value)/Initial complex viscosity value] X 100 (%).

In one embodiment, the rate of change in complex viscosity is less than 15%, for example, less than 13%, less than 11%, less than 9%, or less than 6%, but is not limited thereto. In addition, the rate of change in complex viscosity is 0.5% or more, for example, 1.0% or more or 1.5% or more, but is not limited thereto.

When the biodegradable polyester resin composition has the rate of change in complex viscosity within the above range, the productivity and processability of the composition may be improved, and the biodegradable polyester film produced therefrom may have improved tensile strength, elongation, and tear strength.

In one embodiment, the biodegradable polyester resin composition has a melt flow index (MI) of 10 g/10 min or less as measured at 190°C under a load of 2.16 kg in accordance with the ASTM D1238 standard. The melt flow index is 10 g/10 min or less, for example, 8 g/10 min or less, 6 g/10 min or less, or 5 g/10 min or less, but is not limited thereto. When the melt flow index satisfies the above range, the productivity and processability of the composition may be improved, and the biodegradable polyester film produced therefrom may have improved tensile strength, elongation, and tear strength.

**[Method for preparing biodegradable polyester composition]**

According to another embodiment, a method for preparing a biodegradable polyester resin composition includes a first step of preparing a raw material mixture containing an aromatic dicarboxylic acid, an aliphatic dicarboxylic acid, and an aliphatic diol; a second step of reacting the raw material mixture to prepare an oligomer; a third step of polycondensing the oligomer to prepare a prepolymer; and a fourth step of adding a chain extender to the prepolymer to obtain a biodegradable polyester resin composition, wherein the raw material mixture in the first step has a moisture content of 3,000 ppm or less, and the biodegradable polyester resin composition prepared in the fourth step satisfies Formula 1.

The biodegradable polyester resin composition prepared by the above-described preparation method may be the same as that in the above-described embodiment. Therefore, repeated descriptions with the above-described contents will be omitted below, and the preparation method of one embodiment will be described step by step.

First step

In the first step, a raw material mixture containing an aromatic dicarboxylic acid, an aliphatic dicarboxylic acid, and an aliphatic diol is prepared.

The moisture content in the raw material mixture is measured using a Karl Fischer titrator, and specifically, the moisture content (%) is calculated by titrating with a Karl Fischer reagent (KFR) according to the following Formula 3.

[Formula 3]

$$\frac{(T - S) \times R}{M} \times 100$$

In Formula 3, T represents the volume (ml) of the Karl Fischer reagent consumed for sample titration, S represents the volume (ml) of the Karl Fischer reagent consumed for blank titration, R represents the titer (mg/ml) of the Karl Fischer reagent, and M represents the mass (mg) of the sample.

In one embodiment, the moisture content in the raw material mixture is 3,000 ppm or less, for example, 2,900 ppm or less, 2,800 ppm or less, 2,600 ppm or less, or 2,200 ppm or less, but is not limited thereto. In addition, the moisture content in the raw material mixture is 1,400 ppm or more, for example, 1,500 ppm or more, but is not limited thereto.

When the moisture content of the raw material mixture does not satisfy the above range, the catalyst activity may be reduced during the preparation process of the resin composition, and hydrolysis of the resin composition may be caused, resulting in deterioration of the physical properties of the biodegradable polyester resin film formed therefrom, whereas when the moisture content of the raw material mixture satisfies the above range, the biodegradable polyester resin composition may be uniform.

In one embodiment, the aromatic dicarboxylic acid contained in the raw material mixture has a particle size distribution index (SPAN) of 5.0 or less, for example, 4.5 or less, 4.0 or less, or 3.5, but is not limited thereto. In addition, the aromatic dicarboxylic acid has a particle size distribution index of 0.5 or more, for example, 1.0 or more or 1.5 or more, but is not limited thereto.

The particle size distribution index (SPAN) of the aromatic dicarboxylic acid may be measured using a particle size analyzer (LS13320 XR, Dry Powder Module, Beckman Coulter).

When the particle size distribution index of the aromatic dicarboxylic acid is within the above range, the biodegradable polyester resin composition may be uniform.

In one embodiment, the aromatic dicarboxylic acid is terephthalic acid, isophthalic acid, furandicarboxylic acid, naphthalenedicarboxylic acid, a diester derivative thereof, an anhydride thereof, or a combination thereof, and, for example, is terephthalic acid, isophthalic acid, a diester derivative thereof, or a combination thereof, but is not limited thereto.

In one embodiment, the aliphatic dicarboxylic acid is adipic acid, succinic acid, glutaric acid, azelaic acid, sebacic acid, a cyclic fatty acid, a diester derivative thereof, an anhydride thereof, or a combination thereof, and, for example, is adipic acid, succinic acid, a diester derivative thereof, or a combination thereof, but is not limited thereto.

In one embodiment, the aromatic dicarboxylic acid is contained in an amount of 20 mol% to 50 mol%, for example, 20 mol% to 45 mol%, 20 mol% to 40 mol%, 20 mol% to 35 mol%, or 20 mol% to 30 mol%, based on the total number of moles of the raw material mixture, but is not limited thereto.

In one embodiment, the aliphatic dicarboxylic acid is contained in an amount of 20 mol% to 50 mol%, for example, 20 mol% to 45 mol%, 20 mol% to 40 mol%, 20 mol% to 35 mol%, or 20 mol% to 30 mol%, based on the total number of moles of the raw material mixture, but is not limited thereto.

In one embodiment, the aliphatic diol may be 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or a mixture thereof, but is not limited thereto.

In one embodiment, the aliphatic diol is contained in an amount of 30 mol% to 60 mol%, for example, 30 mol% to 55 mol%, 35 mol% to 55 mol%, 40 mol% to 60 mol%, 40 mol% to 55 mol%, or 50 mol%, based on the total number of moles of the raw material mixture, but is not limited thereto.

In one embodiment, a molar ratio of the aromatic dicarboxylic acid and the aliphatic dicarboxylic acid to the aliphatic diol is 1.0:0.8 to 1.0:1.2, for example, 1.0:0.8 to 1.0:1.15 or 1.0:1.1, but is not limited thereto.

In another embodiment, the raw material mixture may further contain a compound, such as a branching agent or a catalyst, to improve the physical properties of the biodegradable polyester resin composition.

For example, the branching agent may have, as a crosslinkable functional group, a hydroxyl group (-OH), a carboxyl group (-COOH), or an anhydride. Specifically, examples of the branching agent include glycerol, trimethylolpropane, and pentaerythritol. The branching agent may be added not only in the first step but also in the latter stage of the second step or the latter stage of the third step.

For example, the catalyst may be a titanium (Ti)-based catalyst, and the titanium (Ti)-based catalyst may include a titanium (Ti)-based esterification catalyst, a titanium (Ti)-based polycondensation catalyst, or a combination thereof. The titanium (Ti)-based esterification catalyst may include an organic acid chelate titanium compound and an inorganic titanium compound. The titanium (Ti)-based polycondensation catalyst may include titanium tetraalkoxide compounds or a combination thereof.

When a titanium (Ti)-based catalyst is further contained in the raw material mixture, oligomers having a uniform size may be prepared, and unreacted materials may be prevented.

Second step

In the second step, the raw material mixture is reacted to prepare an oligomer. In order to prevent thermal decomposition during the second step, the reaction should be efficiently performed within a short time. When the reaction temperature in the second step is too low, the residence time increases and unreacted materials may be generated, whereas when the reaction temperature is too high, among the reactants, the diol, particularly 1,4-butanediol, undergoes decomposition to form THF, such that 1,4-butanediol cannot sufficiently participate in the reaction, which may also lead to the generation of unreacted materials.

The second step may be performed at a temperature range of 190°C to 230°C, such that macromolecules or aggregates in the final biodegradable polyester composition may be minimized. Specifically, in the second step, the esterification reaction of the raw material mixture may be performed at a temperature range of 190 to 230°C under a low vacuum, and water ($H_2O$), which is a by-product, and side reaction products may be removed from the system through a rectifying column, thereby obtaining an oligomer.

In one embodiment, a reaction conversion rate of the oligomer in the second step is represented by the following Formula 2, and the reaction conversion rate is 90% to 100%.

[Formula 2]

$$\text{Reaction conversion rate (\%)} = \frac{SV - AV}{SV} \times 100$$

In Formula 2, AV (acid value) represents the acid value represented by the following Formula 2-1; and SV (saponification value) represents the saponification value represented by the following Formula 2-2.

[Formula 2-1]

$$\text{Acid value (AV)} = \frac{0.1 \times A \times P}{W}$$

In Formula 2-1, A represents the titration volume (ml) of a 0.1 N sodium hydroxide solution, P represents the titer of the 0.1 N sodium hydroxide solution, and W represents the mass (g) of the oligomer.

[Formula 2-2]

$$\text{Saponification value (SV)} = \frac{0.5 \times (C - B) \times Q}{W'}$$

In Formula 2-2, B represents the titration volume (ml) of a 0.5 N hydrochloric acid (HCl) solution, C represents the titration volume (ml) of a blank solution, Q represents the titer of the 0.5 N hydrochloric acid solution, and W' represents the mass (g) of the oligomer.
The reaction conversion rate of the oligomer is 90% to 100%, for example, 91% to 100%, 93% to 100%, 95% to 100%, or 96% to 100%, but is not limited thereto.
When the reaction conversion rate of the oligomer satisfies the above range, the reaction rate of the preparation process may be uniformly controlled, and side reactions may be suppressed, such that the biodegradable polyester resin composition may be uniform.

Third step

In the third step, the oligomer may be polycondensed to prepare a prepolymer. In order to prevent thermal decomposition during the third step, the reaction may be efficiently performed within a short time. When the reaction temperature in the third step is too high, a thermal decomposition reaction may become predominant over the polycondensation reaction, resulting not only in the formation of decomposition products but also in an increased residence time.
In this regard, the third step may be performed under a vacuum of 1 Torr or less at a temperature range of 210°C to 250°C, such that by-products generated by thermal decomposition in the final biodegradable polyester composition may be minimized.
Accordingly, a prepolymer having a melt flow index (MI) of 5 g/10 min to 60 g/10 min as measured at 190°C under a load of 2.16 kg in accordance with the ASTM D1238 standard may be obtained.
In one embodiment, a thermal stabilizer may be further added in the third step for the reaction.
For example, the thermal stabilizer may be a phosphorus (P)-based thermal stabilizer, and may be, for example, trimethyl phosphonoacetate, triethyl phosphonoacetate, phosphoric acid, phosphorous acid, polyphosphoric acid, trimethyl phosphate (TMP), triethyl phosphate, trimethyl phosphine, triphenyl phosphine, or a combination thereof.
By adding the phosphorus (P)-based thermal stabilizer, thermal decomposition may be prevented without reducing the activity of the catalyst.

Fourth step

In the fourth step, a chain extender may be added to the prepolymer to further increase the viscosity, thereby obtaining a polyester resin composition.

In the fourth step, when the prepolymer and the chain extender are mixed at a high speed or under high shear to promote a smooth reaction therebetween, decomposition may occur due to increased shear stress, and when the reaction is performed at a high temperature, thermal decomposition may also occur, resulting in a sharp increase in the molecular weight distribution of the final biodegradable polyester.

Accordingly, it is preferable that the fourth step is performed at a temperature range of 120°C to 250°C for 0 to 30 minutes using a static mixer or a dynamic mixer.

**[Biodegradable polyester film]**

According to another embodiment, a biodegradable polyester film may be obtained by melt-extruding the above-described biodegradable polyester resin composition using a blown film extruder, and according to still another embodiment, a biodegradable polyester film may be obtained by melt-extruding, using a blown film extruder, the biodegradable polyester resin composition prepared by the above-described preparation method. The manufacturing process of the biodegradable polyester film is not limited thereto.

The obtained biodegradable polyester film has a thickness of 30 μm to 70 μm, for example, 30 μm to 60 μm, 40 μm to 70 μm, 40 μm to 60 μm, or 50 μm, but is not limited thereto.

Hereinafter, the present invention will be described with reference to Examples. However, the following Examples are provided by way of example only and the scope of the present invention is not limited thereto.

**Preparation of biodegradable polyester resin composition**

**Example 1:**

First step: 24 mol% of terephthalic acid (TPA), 26 mol% of adipic acid (AA), and 50 mol% of 1,4-butanediol (1,4-BDO) are stirred to prepare a raw material mixture. The particle size distribution index (SPAN) of the terephthalic acid and the moisture content in the raw material mixture are shown in Table 1.

Second step: Tetrabutyl titanate, which is a titanium-based catalyst, is added to the raw material mixture of the first step, and the reaction is performed at 220°C under a low vacuum of 650 mbar while removing the generated effluent water through a rectifying column, thereby preparing an oligomer. The reaction conversion rate of the oligomer in the second step is shown in Table 1.

Third step: The reaction mixture obtained after the second step is heated to 250°C and subjected to polycondensation at 1 torr or less, and the reaction is terminated upon reaching the discharge load, thereby obtaining a prepolymer having a number average molecular weight of 35,000 g/mol.

Fourth step: The obtained biodegradable polyester prepolymer is dried and then subjected to a chain extension process using a mixer, thereby obtaining a final biodegradable polyester resin composition having the properties shown in Table 2.

**Examples 2 to 6**

Biodegradable polyester resin compositions are prepared by varying the properties of the raw materials as shown in Table 1.

**Comparative Examples 1 to 4**

Biodegradable polyester resin compositions are prepared by varying the properties of the raw materials as shown in Table 1.

**Experimental Example 1: Physical properties of raw material mixture**

Moisture content in raw material mixture: The moisture content (%) is calculated by titration with a Karl Fischer reagent (KFR) using a Karl Fischer titrator, according to the following Formula 3.

[Formula 3]

$$\frac{(T - S) \times R}{M} \times 100$$

In Formula 3, T represents the volume (ml) of the Karl Fischer reagent consumed for sample titration, S represents the volume (ml) of the Karl Fischer reagent consumed for blank titration, R represents the titer (mg/ml) of the Karl Fischer reagent, and M represents the mass (mg) of the raw material mixture sample.

Particle size distribution index (SPAN) of aromatic dicarboxylic acid: The measurement is performed using a particle size analyzer (LS13320 XR, Dry Powder Module, Beckman Coulter), and the SPAN is calculated using the following Formula 4.

[Formula 4]

SPAN = (D90 - D10)/D50

In Formula 4, D90 refers to the particle diameter corresponding to a cumulative volume of 90% on the smaller particle size side in the particle size distribution curve, D10 refers to the particle diameter corresponding to a cumulative volume of 10% on the smaller particle size side, and D50 refers to the particle diameter corresponding to a cumulative volume of 50% on the smaller particle size side.

**Experimental Example 2: Measurement of reaction conversion rate of oligomer**

Measurement of acid value (acidity value: AV)

A sample solution obtained by injecting 50 ml of dimethylformamide (DMF) into 0.2 g of each of the oligomer samples of Examples 1 to 6 and Comparative Examples 1 to 4, and a 50 ml dimethylformamide solvent without the sample (hereinafter, referred to as the "blank solution"), are prepared. Dissolution is performed for 1 hour in an ultrasonic bath at a temperature of 85°C to 90°C, and then the solution is cooled to room temperature. Two or three drops of 0.1% rosolic acid are added to each of the sample solution and the blank solution, and solutions are titrated with an N/10-NaOH methanol solution. The end point is defined as the point at which the color changes from light yellow to pale purple, and the acid value is calculated using the following Formula 2-1.

[Formula 2-1]

$$Acid\ value\ (AV) = \frac{0.1 \times A \times P}{W}$$

In Formula 2-1, A represents the titration volume (ml) of a 0.1 N sodium hydroxide solution, P represents the titer of the 0.1 N sodium hydroxide solution, and W represents the mass (g) of the oligomer.

Measurement of saponification value (SA)

A sample solution is prepared by injecting 20 ml of a 0.5 N alcoholic KOH solution into 0.4 g of each of the oligomer samples of Examples 1 to 6 and Comparative Examples 1 to 4, and adding two or three boiling stones, and a blank solution is prepared by adding two or three boiling stones to 20 ml of a 0.5 N alcoholic KOH solution not containing the sample. The sample solution and the blank solution are hydrolyzed for 40 minutes in an oil bath at 110°C equipped with a cooling condenser. 15 ml of distilled water is injected and thoroughly mixed, and the mixture is cooled to room temperature. Thereafter, three or four drops of 0.1% phenolphthalein are added to each of the sample solution and the blank solution, and titration is performed with 0.5 N HCl. The end point is defined as the point at which the color changes from pink to colorless, and the saponification value is calculated using the following Formula 2-2.

[Formula 2-2]

$$\text{Saponification value (SV)} = \frac{0.5 \times (C - B) \times Q}{W'}$$

In Formula 2-2, B represents the titration volume (ml) of a 0.5 N hydrochloric acid (HCl) solution, C represents the titration volume (ml) of a blank solution, Q represents the titer of the 0.5 N hydrochloric acid solution, and W' represents the mass (g) of the oligomer.

Derivation of reaction conversion rate (%)

The reaction conversion rate of the oligomer is calculated by applying the acid value (AV) and the saponification value (SV) obtained above to the following Formula 2.

[Formula 2]

$$\text{Reaction conversion rate (\%)} = \frac{SV - AV}{SV} \times 100$$

The reaction conversion rate of the oligomer obtained by the above method is shown in Table 1.

[Table 1]

| | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|
| 1, 4-BDO (mol%) | 50 | 50 | 50 | 50 | 50 | 50 | 50 | 50 | 50 | 50 |
| TPA (mol%) | 24 | 24 | 24 | 24 | 24 | 24 | 24 | 24 | 24 | 24 |
| AA (mol%) | 26 | 26 | 26 | 26 | 26 | 26 | 26 | 26 | 26 | 26 |
| SPAN of TPA | 1.79 | 3.11 | 2.07 | 2.64 | 2.7 | 1.87 | 5.54 | 8.93 | 2.33 | 2.5 |
| Moisture content in raw material mixture (ppm) | 1480 | 1610 | 2850 | 1560 | 2130 | 2540 | 2080 | 1350 | 5000 | 5000 |
| Reaction conversion rate (%) | 98.4 | 98.9 | 98.7 | 96.4 | 91.5 | 99.9 | 97.0 | 98.1 | 93.1 | 83.4 |

**Experimental Example 3: Physical properties of biodegradable polyester resin composition**

The physical properties of the biodegradable polyester resin compositions of the Examples and Comparative Examples are evaluated by the following methods, and the results are shown in Table 2.

Melt Index (MI): After sample loading, the weight of the polyester extruded through an orifice of a capillary rheometer is measured under a load of 2.16 kg at 190°C for 10 minutes, in accordance with the ASTM D1238 standard.

Molecular weight distribution (PDI): The molecular weight distribution is measured by gel permeation chromatography (GPC, Technology 1200 Series, Agilent Technologies) using chloroform as a solvent and polystyrene as a standard material. The measurement is performed at a column and detector temperature of 40°C and a flow rate of 1 mL/min.

Zero shear viscosity ($\eta 0$): The zero shear viscosity refers to the complex viscosity value at an angular frequency of 0.1 rad/s, obtained by performing a frequency sweep test at a strain of 1%.

Cumulative storage coefficient (Cot $\delta$): The storage modulus and loss modulus are measured by mounting a 25 mm parallel plate on a rotational rheometer (HR-2, TA Instruments) and performing a frequency sweep in a frequency range of 10 rad/s to 100 rad/s at a temperature of 190°C. FIG. 1 is a graph showing the storage modulus and loss modulus of the Examples and Comparative Examples. The cumulative storage coefficient refers to a value obtained by dividing the integral value of the storage modulus in a frequency range of 10 rad/s to 100 rad/s by the integral value of the loss modulus, as shown in the following Formula 1-1.

| [Formula 1-1]

$$\text{Cumulative storage coefficient } (\cot\delta) = \int_{10\,rad/s}^{100\,rad/s} G' \bigg/ \int_{10\,rad/s}^{100\,rad/s} G''$$

|

Rate of change in complex viscosity: The measurement is performed using a rotational rheometer (HR-2, TA Instruments), and during a time sweep test conducted for 10 minutes at a fixed angular frequency of 20 rad/s and a fixed strain of 1%, the rate of change in viscosity is calculated relative to the initial viscosity. Specifically, the rate of change in complex viscosity is calculated by [(Complex viscosity value after 10 minutes - Initial complex viscosity value)/Initial complex viscosity value] X 100 (%).

**Experimental Example** 4: **Physical properties of biodegradable polyester film**

The biodegradable polyester resin compositions obtained in the Examples and Comparative Examples are melt-extruded using a blown film extruder to prepare 50-$\mu$m biodegradable polyester films. The physical properties are evaluated by the following methods, and the results are shown in Table 2.

Tensile strength: The tensile strength refers to the degree of resistance of the film to tearing, and the tensile strength is measured using a universal testing machine 5965 available from INSTRON in accordance with the ASTM D882 standard.

Elongation: The elongation is measured using a universal testing machine 5965 available from INSTRON in accordance with the ASTM D882 standard.

Tear strength: The tear strength is measured using an Elmendorf tear tester available from Thwing-Albert Instrument Company in accordance with the ASTM D1922 standard.

[Table 2]

| | Evaluation items | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Resin composition | MI (g/10 min) | 3 | 2.7 | 3.5 | 3 | 3.3 | 3.1 | 3.4 | 2.8 | 3.1 | 3 |
| | PDI | 1.89 | 2.01 | 2.2 | 2.14 | 1.98 | 2.17 | 2.56 | 3.01 | 2.61 | 2.75 |
| | Zero shear viscosity (Pa·s) | 4059 | 4425 | 3473 | 3863 | 3598 | 3696 | 3630 | 4672 | 3741 | 2990 |
| | Cumulative storage coefficient | 0.783 | 0.836 | 0.798 | 0.852 | 0.988 | 0.754 | 1.680 | 2.462 | 1.742 | 0.079 |
| | Rate of change in complex viscosity (%) | 2.4 | 3.4 | 2.1 | 3.6 | 5.6 | 1.6 | 10.5 | 18.7 | 16.0 | 20.6 |
| Film | Tensile strength (kgf/cm$^2$) | 558 | 487 | 523 | 508 | 492 | 560 | 338 | 301 | 325 | 320 |
| | Elongation (%) | 470 | 463 | 460 | 455 | 456 | 468 | 435 | 428 | 431 | 438 |
| | Tear strength (g/μm) | 3.4 | 3.1 | 3.4 | 3.1 | 2.8 | 3.5 | 2.4 | 1.1 | 1.7 | 1.3 |

Referring to Table 2, it can be confirmed that the biodegradable polyester resin compositions according to the Examples have a cumulative storage coefficient of 0.1 to 1.5 and a rate of change in complex viscosity (%) of less than 6%. It can be confirmed that the biodegradable polyester films according to the Examples exhibit superior tensile strength, elongation, and tear strength to those of the biodegradable polyester films according to the Comparative Examples.

Although the preferred embodiments of the present invention have been described in detail above, the scope of the present invention is not limited thereto, and various modifications and improvements made by those skilled in the art using the basic concept of the present invention defined in the following claims also fall within the scope of the present invention.

**Claims**

1. A biodegradable polyester resin composition comprising a resin containing a residue of a dicarboxylic acid component and a residue of a diol component, the biodegradable polyester resin composition satisfying the following Formula 1:

[Formula 1]

$$0.1 \leq \int_{\frac{10\,rad}{s}}^{\frac{100\,rad}{s}} G' \bigg/ \int_{\frac{10\,rad}{s}}^{\frac{100\,rad}{s}} G'' \leq 1.5$$

wherein

G' represents a storage modulus measured at a temperature of 190°C and in a frequency range of 10 rad/s to 100 rad/s in a dynamic viscoelastic measurement, and
G" represents a loss modulus measured at a temperature of 190°C and in a frequency range of 10 rad/s to 100 rad/s in a dynamic viscoelastic measurement.

2. The biodegradable polyester resin composition of claim 1, wherein the dicarboxylic acid component includes an aromatic dicarboxylic acid having 6 to 12 carbon atoms and an aliphatic dicarboxylic acid having 4 to 10 carbon atoms,

the aromatic dicarboxylic acid having 6 to 12 carbon atoms includes terephthalic acid, isophthalic acid, furandicarboxylic acid, naphthalenedicarboxylic acid, a diester derivative thereof, an anhydride thereof, or a mixture thereof, and
the aliphatic dicarboxylic acid having 4 to 10 carbon atoms includes adipic acid, succinic acid, glutaric acid, azelaic acid, sebacic acid, a cyclic fatty acid, a diester derivative thereof, an anhydride thereof, or a mixture thereof.

3. The biodegradable polyester resin composition of claim 1, wherein the dicarboxylic acid component includes 30 mol% to 70 mol% of the aromatic dicarboxylic acid having 6 to 12 carbon atoms and 30 mol% to 70 mol% of the aliphatic dicarboxylic acid having 4 to 10 carbon atoms, based on the total amount of the dicarboxylic acid component.

4. The biodegradable polyester resin composition of claim 1, wherein the diol includes an aliphatic diol having 2 to 10 carbon atoms, and
the aliphatic diol having 2 to 10 carbon atoms includes 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or a mixture thereof.

5. The biodegradable polyester resin composition of claim 1, wherein a molar ratio of the dicarboxylic acid component to the diol component is 1.0:0.8 to 1.0:1.2.

6. The biodegradable polyester resin composition of claim 1, wherein a rate of change in complex viscosity before and after an oscillatory time sweep at a temperature of 190°C and a frequency of 20 rad/s for 10 minutes is less than 15%.

7. The biodegradable polyester resin composition of claim 1, wherein the biodegradable polyester resin composition has a melt flow index (MI) of 10 g/10 min or less as measured at 190°C under a load of 2.16 kg in accordance with the ASTM D1238 standard.

8. A method for preparing a biodegradable polyester resin composition, the method comprising:

a first step of preparing a raw material mixture containing an aromatic dicarboxylic acid, an aliphatic dicarboxylic acid, and an aliphatic diol;
a second step of reacting the raw material mixture to prepare an oligomer;
a third step of polycondensing the oligomer to prepare a prepolymer; and
a fourth step of adding a chain extender to the prepolymer to obtain a biodegradable polyester resin composition,
wherein the raw material mixture in the first step has a moisture content of 3,000 ppm or less, and
the biodegradable polyester resin composition prepared in the fourth step satisfies the following Formula 1:

[Formula 1]

$$0.1 \leq \int_{\frac{10rad}{s}}^{\frac{100rad}{s}} G' \Bigg/ \int_{\frac{10rad}{s}}^{\frac{100rad}{s}} G'' \leq 1.5$$

wherein

G' represents a storage modulus measured at a temperature of 190°C and in a frequency range of 10 rad/s to 100 rad/s in a dynamic viscoelastic measurement, and
G" represents a loss modulus measured at a temperature of 190°C and in a frequency range of 10 rad/s to 100 rad/s in a dynamic viscoelastic measurement.

9. The method of claim 8, wherein the aromatic dicarboxylic acid has a particle size distribution index (SPAN) of 5.0 or less.

10. The method of claim 8, wherein a reaction conversion rate of the oligomer in the third step is represented by the following Formula 2, and the reaction conversion rate is 90% to 100%:

[Formula 2]

$$\text{Reaction conversion rate (\%)} = \frac{SV - AV}{SV} \times 100$$

wherein

AV represents the acid value represented by the following Formula 2-1; and
SV represents the saponification value represented by the following Formula 2-2:

[Formula 2-1]

$$\text{Acid value (AV)} = \frac{0.1 \times A \times P}{W}$$

wherein A represents the titration volume (ml) of a 0.1 N sodium hydroxide solution, P represents the titer of the 0.1 N sodium hydroxide solution, and W represents the mass of the oligomer:

[Formula 2-2]

$$\text{Saponification value (SV)} = \frac{0.5 \times (C - B) \times Q}{W'}$$

wherein B represents the titration volume (ml) of a 0.5 N hydrochloric acid (HCl) solution, C represents the titration volume (ml) of a blank solution, Q represents the titer of the 0.5 N hydrochloric acid solution, and W' represents the mass of the oligomer.

11. The method of claim 8, wherein the aromatic dicarboxylic acid is terephthalic acid, isophthalic acid, furandicarboxylic acid, naphthalenedicarboxylic acid, a diester derivative thereof, an anhydride thereof, or a combination thereof, and the aliphatic dicarboxylic acid is adipic acid, succinic acid, glutaric acid, azelaic acid, sebacic acid, a cyclic fatty acid, a diester derivative thereof, an anhydride thereof, or a combination thereof.

12. The method of claim 8, wherein the aromatic dicarboxylic acid is contained in an amount of 20 mol% to 50 mol%, and the aliphatic dicarboxylic acid is contained in an amount of 20 mol% to 50 mol%, based on the total number of moles of the raw material mixture.

13. The method of claim 8, wherein the aliphatic diol is 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or a mixture thereof.

14. The method of claim 8, wherein the aliphatic diol is contained in an amount of 30 mol% to 60 mol% based on the total number of moles of the raw material mixture.

15. The method of claim 8, wherein a molar ratio of the aromatic dicarboxylic acid and the aliphatic dicarboxylic acid to the aliphatic diol is 1.0:0.8 to 1.0:1.2.

16. A biodegradable polyester film obtained by melt-extruding the biodegradable polyester resin composition of any one of claims 1 to 7 using a blown film extruder.

17. A biodegradable polyester film obtained by melt-extruding, using a blown film extruder, a biodegradable polyester resin composition prepared by the method for preparing a biodegradable polyester resin composition of any one of claims 8 to 15.

【FIG. 1】

## INTERNATIONAL SEARCH REPORT

| International application No. |
| --- |
| **PCT/KR2024/007455** |

| A. | CLASSIFICATION OF SUBJECT MATTER |
| --- | --- |

**C08G 63/16**(2006.01)i; **C08G 63/78**(2006.01)i; **C08J 5/18**(2006.01)i

According to International Patent Classification (IPC) or to both national classification and IPC

| B. | FIELDS SEARCHED |
| --- | --- |

Minimum documentation searched (classification system followed by classification symbols)

C08G 63/16(2006.01); B32B 27/10(2006.01); C08G 63/183(2006.01); C08G 63/78(2006.01); C08G 63/91(2006.01); C08J 5/18(2006.01); C08K 5/52(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디카르복실산(dicarboxylic acid), 디올(diol), 생분해성 폴리에스테르 수지 (biodegradable polyester resin), 저장탄성률(storage modulus), 손실탄성률(loss modulus), 테레프탈산(terephthalic acid), 아디프산(adipic acid), 1,4-부탄디올(1,4-butanediol)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2023-0056491 A (ECOVANCE CO., LTD.) 27 April 2023 (2023-04-27) See paragraphs [0146], [0152], [0278]-[0287], [0296], [0299], [0377] and [0391]-[0395]; claim 1; and tables 1-2. | 1-17 |
| X | KR 10-2022-0159255 A (ECOVANCE CO., LTD.) 02 December 2022 (2022-12-02) See paragraphs [0254]-[0262], [0268], [0359]-[0363] and [0381]-[0383]; claim 1; and tables 1-2. | 1-17 |
| A | KR 10-1999-0088005 A (TOYO BOSEKI KABUSHIKI KAISHA) 27 December 1999 (1999-12-27) See entire document. | 1-17 |
| A | KR 10-2014-0076355 A (SAMSUNG FINE CHEMICALS CO., LTD. et al.) 20 June 2014 (2014-06-20) See entire document. | 1-17 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 September 2024** | **13 September 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/007455**

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2016-0237209 A1 (LOTTE FINE CHEMICAL CO., LTD.) 18 August 2016 (2016-08-18) See entire document. | 1-17 |

Form PCT/ISA/210 (second sheet) (July 2022)

# EP 4 725 975 A1

| INTERNATIONAL SEARCH REPORT | | International application No. |
| :---: | :---: | :---: |
| Information on patent family members | | **PCT/KR2024/007455** |

| Patent document cited in search report | | | Publication date (day/month/year) | Patent family member(s) | | | Publication date (day/month/year) |
| :---: | :---: | :---: | :---: | :---: | :---: | :---: | :---: |
| KR | 10-2023-0056491 | A | 27 April 2023 | KR | 10-2671853 | B1 | 04 June 2024 |
| | | | | WO | 2023-068594 | A1 | 27 April 2023 |
| KR | 10-2022-0159255 | A | 02 December 2022 | CN | 115386072 | B | 02 April 2024 |
| | | | | EP | 4095180 | A1 | 30 November 2022 |
| | | | | EP | 4095180 | B1 | 14 February 2024 |
| | | | | JP | 2022-181205 | A | 07 December 2022 |
| | | | | JP | 2023-058640 | A | 25 April 2023 |
| | | | | JP | 7291268 | B2 | 14 June 2023 |
| | | | | KR | 10-2023-0058600 | A | 03 May 2023 |
| | | | | KR | 10-2431671 | B1 | 12 August 2022 |
| | | | | KR | 10-2526520 | B1 | 27 April 2023 |
| | | | | KR | 10-2634461 | B1 | 06 February 2024 |
| | | | | US | 11667751 | B2 | 06 June 2023 |
| | | | | US | 11932725 | B2 | 19 March 2024 |
| | | | | US | 2022-0389154 | A1 | 08 December 2022 |
| | | | | US | 2023-0257516 | A1 | 17 August 2023 |
| KR | 10-1999-0088005 | A | 27 December 1999 | JP | 11-315152 | A | 16 November 1999 |
| | | | | KR | 10-0427491 | B1 | 30 April 2004 |
| KR | 10-2014-0076355 | A | 20 June 2014 | CN | 104854163 | A | 19 August 2015 |
| | | | | JP | 2016-500392 | A | 12 January 2016 |
| | | | | US | 2015-0307657 | A1 | 29 October 2015 |
| | | | | US | 9416224 | B2 | 16 August 2016 |
| | | | | WO | 2014-092276 | A1 | 19 June 2014 |
| US | 2016-0237209 | A1 | 18 August 2016 | CN | 105658728 | A | 08 June 2016 |
| | | | | EP | 3061790 | A1 | 31 August 2016 |
| | | | | EP | 3061790 | A4 | 12 April 2017 |
| | | | | JP | 2016-538355 | A | 08 December 2016 |
| | | | | KR | 10-2015-0047939 | A | 06 May 2015 |
| | | | | WO | 2015-060578 | A1 | 30 April 2015 |

Form PCT/ISA/210 (patent family annex) (July 2022)